# EUROPÄISCHE PATENTSCHRIFT

(11) **EP 0 571 320 B1**
(45) Veröffentlichungstag und Bekanntmachung des Hinweises auf die Patenterteilung: **13.11.1996**
(21) Anmeldenummer: 93810269.6
(22) Anmeldetag: 15.04.1993
(51) Int. Cl.: G02C 7/04

(54) **Weiche torische Kontaktlinse**
Soft toric contact lens
Lentille de contact torique souple

(30) Priorität: 23.04.1992 EP 92810295
(43) Veröffentlichungstag der Anmeldung: 24.11.1993
(73) Patentinhaber: CIBA-GEIGY AG, 4002 Basel (CH)
(72) Erfinder: Hahne, Christoph, W-4300 Essen (DE); Höfer, Peter, W-8750 Aschaffenburg (DE); Hörner, Willi, W-8751 Sulzbach (DE); Reichner, Martin, W-8750 Aschaffenburg (DE)

(56) Entgegenhaltungen:
- EP-A- 0 062 178
- EP-A- 0 440 107
- WO-A-89/07303
- FR-A- 2 425 088
- US-A- 4 095 878
- US-A- 4 508 436
- US-A- 5 069 542

## Beschreibung

Die Erfindung betrifft eine weiche torische Kontaktlinse zur Korrektur von reinem Astigmatismus und Astigmatismus in Verbindung mit sphärischer Fehlsichtigkeit gemäss dem Oberbegriff des unabhängigen Anspruchs.

Im Gegensatz zu formstabilen sog. harten Kontaktlinsen bestehen sog. weiche Kontaktlinsen aus einem flexiblen Material und schmiegen sich beim Tragen an die Cornea und die Sklera des Auges an. Dieses grundsätzlich unterschiedliche Verhalten von harten und weichen Kontaktlinsen hat Auswirkungen auf die Gestaltung und die Herstellung von Kontaktlinsen.

Ein bekanntes und bewährtes Verfahren zur Herstellung von weichen Kontaktlinsen ist das sog. Semimold-Verfahren (vgl. z.B. US-PS 4 155 962). Es handelt sich dabei um ein Giessverfahren, bei dem lediglich die Rückfläche der Kontaktlinse bereits ihre definitive Gestalt erhält, während die Vorderfläche durch sich an das Giessverfahren anschliessende spanabhebende Bearbeitung des Giesslings erzeugt wird. Für diese spanabhebende Bearbeitung wird üblicherweise das sog. Fly-Cut-Verfahren (vgl. z.B. US-PS 3 670 460 oder US-PS 4 068 413) verwendet, bei dem ein Schneidwerkzeug mit bestimmtem Abstand um eine erste Achse rotiert und gleichzeitig um eine zweite, zur ersten senkrechte Achse mit ebenfalls bestimmtem Abstand drehverstellt wird.

Die für die Korrektur eines Hornhautastigmatismus erforderliche torische Linsenfläche kann aus optischer Sicht prinzipiell sowohl an der dem Auge abgewandten Vorderseite der Kontaktlinse als auch an der dem Auge zugewandten Rückseite angeordnet bzw. ausgebildet sein. Bei weichen Kontaktlinsen ist die torische Linsenfläche üblicherweise die Vorderfläche. Es sind auch schon Kontaktlinsen mit torischer Rückfläche bekannt, die als Negativ bzw. komplementär zur zu versorgenden Hornhaut ausgebildet ist. Diese Kontaktlinsen sind jedoch in verschiedener Hinsicht problematisch und nachteilig. So besitzen sie nur eine unzureichende Beweglichkeit auf dem Auge, reduzieren die Unterspülung mit Tränenflüssigkeit, erfordern eine komplizierte Anpassung, die die Verwendung von innentorischen Probelinsen zwingend voraussetzt, und erfordern in kritischen Fällen aufgrund eines induzierten Restastigmatismus auch eine torische Vorderfläche.

Die Herstellung weicher torischer Kontaktlinsen mit mittlerer oder hoher negativer Gesamtbrechkraft mittels des genannten Semimold-Verfahrens und des Fly-Cut-Verfahrens ist heute gut beherrschbar und bewährt. Schwierigkeiten ergeben sich aber bei niedriger negativer und insbesondere bei positiver Gesamtbrechkraft. Wenn die torische Vorderfiäche solcher Kontaktlinsen im herkömmlichen Fly-Cut-Verfahren hergestellt werden soll, dann ergeben sich so dicke Linsen, dass ein Tragen dieser Linsen in der Praxis nicht möglich ist. Unpraktikabel dicke Linsen werden üblicherweise durch einen Lenticular-Aufbau vermieden, bei dem die Kontaktlinse nur in ihrem optisch wirksamen Zentralbereich die erforderliche Dicke aufweist, in ihrem peripheren Bereich aber wesentlich dünner ausgebildet ist. Solche torische Kontaktlinsen mit (torischem) Lenticular-Aufbau, welche Beispielsweise aus EP-A-0 440 107 oder WO-A-89/07303 bekannt sind, lassen sich aber andererseits wieder nicht im bewährten Fly-Cut-Verfahren herstellen, sondern erfordern aufwendige Spezialverfahren, die ihrerseits auch wieder mit einer Reihe von Nachteilen (ungenau, schlecht reproduzierbar etc.) behaftet sind und insbesondere keine rationelle Fertigung ermöglichen.

Eine Aufgabe der vorliegenden Erfindung ist es deshalb, eine weiche torische Kontaktlinse im gesamten Brechwertbereich zu schaffen, die sich auch bei positiver Gesamtbrechkraft und mit Lenticular-Aufbau rationell herstellen lässt und zudem den Tragkomfort moderner Kontaktlinsen mit ellipsoidischen Rückflächen bietet. Eine weitere Aufgabe der Erfindung besteht in der Schaffung einer weichen torischen Kontaktlinse, die weitgehend ohne spezielle Anpasslinsen angepasst werden kann und mit einer möglichst kleinen Anzahl von Standardwerten für die Zylinderkorrektur auskommt.

Gemäss dem allgemeinsten Gedanken der Erfindung besteht die Lösung dieser der Erfindung zugrundeliegenden Aufgaben darin, dass die Korrektur des Hornhautastigmatismus auf den optisch wirksamen Zentralbereich der Rückfläche der Kontaktlinse verlagert wird, die torische Linsenfläche also in diesem, im allgemeinen einen mittleren Durchmesser von etwa 5 mm bis 14 mm aufweisenden, Zentralbereich der Kontaktlinsenrückfläche angebracht wird. (Bei diesem optisch wirksamen Zentralbereich der Rückfläche handelt es sich um einen etwa ovalen Bereich, dessen kleinste und grösste Abmessungen etwa 5 mm bzw. etwa 14 mm betragen.) Durch die Beschränkung der torischen Fläche auf den genannten Zentralbereich der Kontaktlinsenrückfläche kann der periphere Bereich derselben im Hinblick auf Tragkomfort und andere Aspekte optimiert ausgestaltet sein. Insbesondere zweckmässig und vorteilhaft ist die von sphärischen Kontaktlinsen an sich bekannte im wesentlichen ellipsoidische Ausbildung der Rückfläche (vgl. US-PS 5 069 542) mit ihren inhärenten Vorzügen wie z.B. gute Beweglichkeit, extrem guter Spontan- und Langzeittragkomfort, gute Unterspülung mit Tränenflüssigkeit und damit Gewährleistung bester physiologischer Voraussetzungen, nur zwei oder wenige Geometrien (flache oder steile Anpassung), etc..

Das erfindungsgemässe Konzept der Verlagerung des Torus auf den Zentralbereich der Kontaktlinsenrückfläche beruht auf der überraschenden Feststellung, dass sich der Rückflächen-Torus bzw. die Radiendifferenz des Rückflächen-Torus zum Hornhaut-Torus aufgrund der Weichheit des Kontaktlinsenmaterials auf die Vorderfläche der Kontaktlinse überträgt und dort zumindest teilweise die gleiche optische Wirkung zeigt wie ein originärer Vorderflächen-Torus, ohne jedoch dessen Herstellungsprobleme und anderen Nachteile aufzuweisen.

Die erfindungsgemässe Kontaktlinse, die der vorstehend definierten Aufgabenstellung genügt, ist durch die Merkmale des unabhängigen Anspruchs gekennzeichnet. Bevorzugte Ausgestaltungen und Weiterbildungen ergeben sich aus den abhängigen Ansprüchen.

Die Stabilisierung der Orientierung der Kontaktlinse auf dem Auge erfolgt vorzugsweise in an sich bekannter Weise dynamisch durch den Lidschlag, wozu die Kontaktlinse an der Vorderseite in ihrem oberen und/oder unteren Bereich mit einer abgeflachten Stabilisierungszone versehen ist (vgl. US-PS 4 095 878). Dabei unterstützt der Rückflächen-Torus im Zentralbereich die dynamische Stabilisierung durch Zusammenwirken mit der Hornhaut. Durch die Beschränkung der Torusfläche auf den Zentralbereich der Kontaktlinsenrückfläche werden dabei aber die schon erwähnten erheblichen Nachteile von Kontaktlinsen mit vollständig torischer Rückfläche gänzlich vermieden.

Ein wesentlicher Vorzug der erfindungsgemässen Kontaktlinse besteht darin, dass die Vorderfläche rein rotationssymmetrisch ausgebildet bzw. bei positiver Gesamtbrechkraft einen rotationssymmetrischen Lenticular-Aufbau aufweisen kann, wodurch die Herstellung der Kontaktlinse in jedem Fall rationell erfolgt. Ferner weisen erfindungsgemässe Kontaktlinsen auch bei geringen negativen und insbesondere bei positiven Gesamtbrechkräften ausreichend geringe Dicken auf.

Weiters hat sich gezeigt, dass die erfindungsgemässe Kontaktlinse auf einfachste Weise mit Hilfe von nur zwei Messlinsen angepasst werden kann; ein spezieller Anpass-Satz ist dafür nicht erforderlich, da die für die Stabilisierung erforderliche Grundgeometrie (Randdickendifferenz etc.) bei jeder Linse gleich ist. Aufgrund der Verwendung von nur zwei Zylinderwerten (vorzugsweise etwa minus 1 cyl und minus 1,75 cyl) für den Rückflächentorus ist die Bevorratung bei einer praktizierten Direktabgabe minimal, d.h. die Anzahl der Linsen eines Kontaktlinsen-Verkaufssatzes hält sich in rationellen Grenzen. Für die Geometrien des ellipsoidischen peripheren Rückflächenbereichs der Kontaktlinse sind bekannterweise ebenfalls nur zwei oder einige wenige verschiedene Standardwerte erforderlich (vgl. US-PS 5 069 542).

Im folgenden wird eine erfindungsgemässe Kontaktlinse anhand der Zeichnung näher beispielsweise erläutert. Es zeigen:

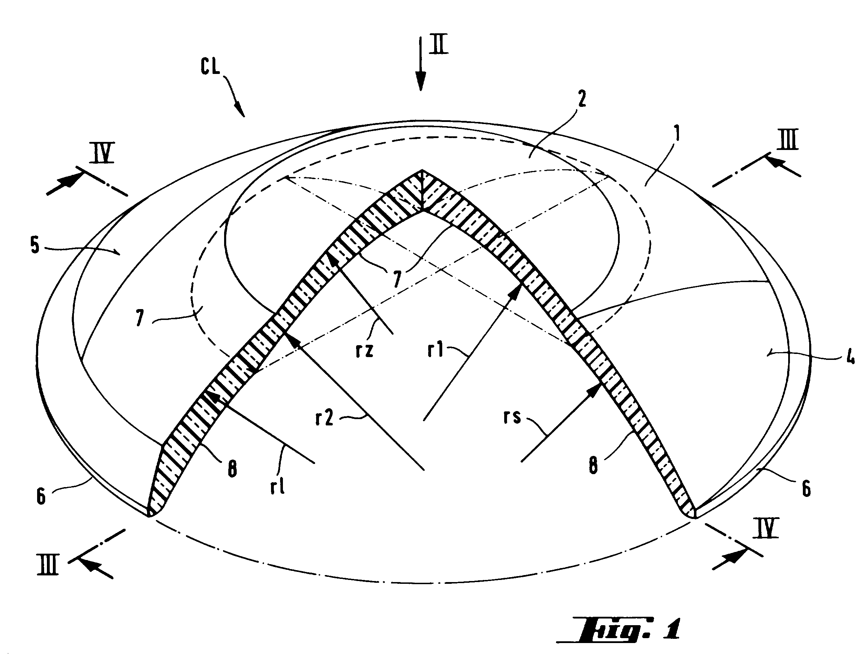

- Figur 1: eine teilweise aufgeschnittene erfindungsgemässe Kontaktlinse in perspektivischer Darstellung,

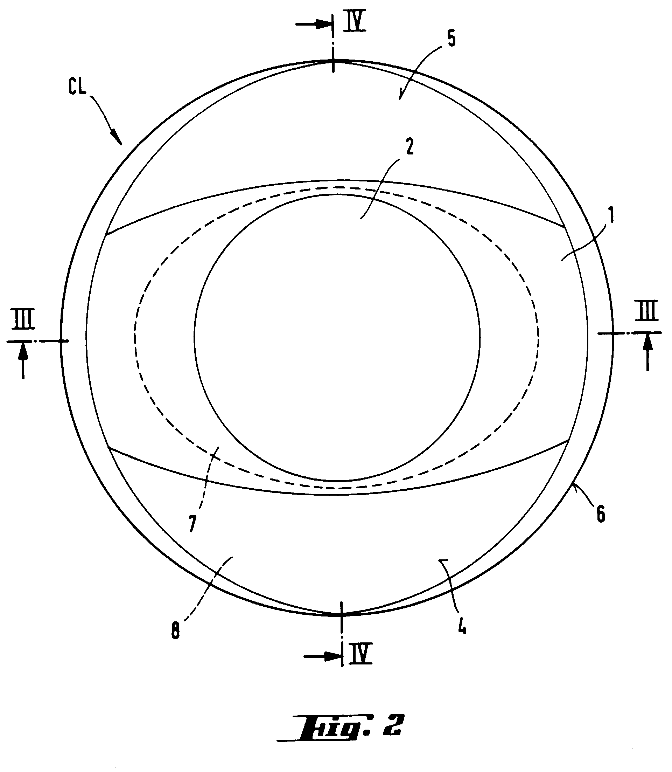

- Figur 2: eine Aufsicht auf die Linse der Figur 1,

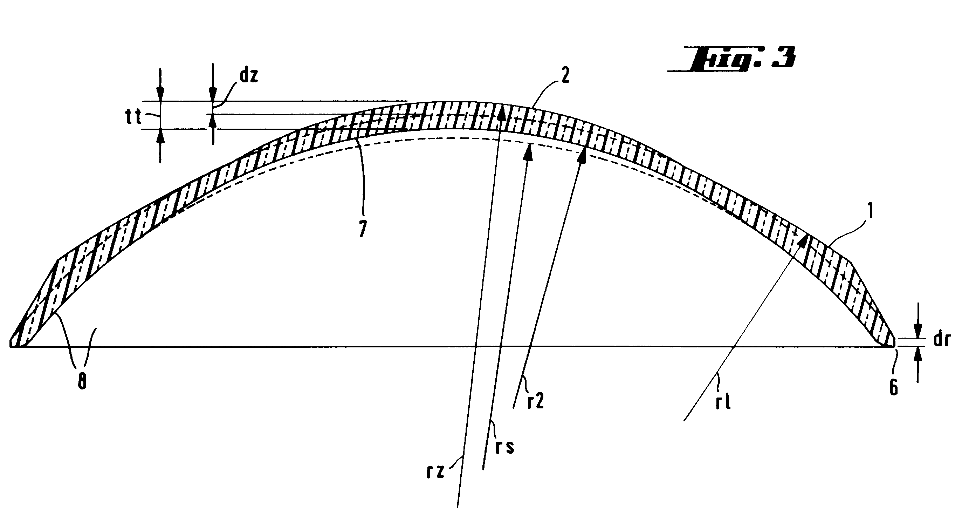

- Figur 3: einen Schnitt nach der Linie III-III der Figur 2 und

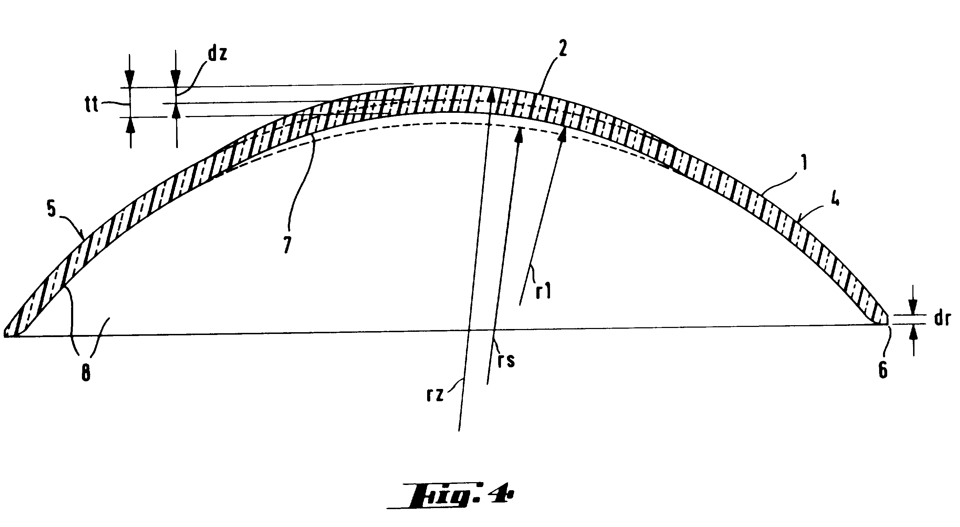

- Figur 4: einen Schnitt nach der Linie IV-IV der Figur 2.

Die als Ganzes mit CL bezeichnete Kontaktlinse weist eine im wesentlichen rotationssymmetrische Vorderfläche, die sich aus einem rotationssymmetrischen optisch wirksamen Zentralbereich 2 und einem ebenfalls rotationssymmetrischen (sphärischen oder asphärischen) Lenticular-Bereich 1 zusammensetzt, und zwei abgeflachte, einander an den 12-Uhr- und 6-Uhr-Positionen gegenüberliegende, etwa sichelförmige Stabilisierungszonen 4 und 5 auf. Ferner weist die Kontaktlinse noch einen etwas dünner ausgebildeten, schmalen Randbereich 6 auf. Die dem Auge zugewandte Rückfläche der Kontaktlinse CL ist in einen optisch wirksamen Zentralbereich 7 und einen diesen umgebenden peripheren Bereich 8 unterteilt.

Das gezeigte Ausführungsbeispiel der erfindungsgemässen Kontaktlinse besitzt eine positive Gesamtbrechkraft. Linsen mit negativer Gesamtbrechkraft besitzen einen Minus-Lentikularaufbau mit dem Ziel der Randverjüngung.

Die Stabilisierungszonen 4 und 5 entsprechen in Ausgestaltung und Wirkung herkömmlichen Zonen dieser Art, beispielsweise etwa wie in der US-PS 4 095 878 beschrieben.

Das Material, aus dem die erfindungsgemässe weiche Kontaktlinse besteht, ist konventionell. Beispielsweise können die folgenden Materialien eingesetzt werden: tefilcon (38%)(Dk=8), hefilcon A&B (43%)(Dk=12), xylofilcon A (67%)(Dk=29), scafilcon A (71%)(Dk=30), deltafilcon A (43%)(Dk=10), ocufilcon (44%)(Dk=16), etafilcon A (58%)(Dk=20), vifilcon A (55%)(Dk=16).

Gemäss dem Hauptgedanken der Erfindung ist die für die Korrektur des Hornhautastigmatismus erforderliche torische Linsenfläche im Zentralbereich 7 der Linsenrückfläche angeordnet. Der diesen umgebende periphere Bereich 8 der Linsenrückfläche ist asphärisch, vorzugsweise ellipsoidisch mit der z.B. in der US-PS 5 069 542 beschriebenen Geometrie ausgebildet. Durch diese Massnahme werden die weiter vorne ausgeführten Vorteile bezüglich Linsendicke, Herstellbarkeit und Tragkomfort erreicht.

Der optisch wirksame, torisch ausgebildete Zentralbereich 7 der Linsenrückfläche weist einen mittleren Durchmesser von etwa 5 mm bis etwa 14 mm auf und besitzt eine ovale Flächengestalt.

Ein mit erfindungsgemässen Kontaktlinsen aufgebauter Kontaktlinsensatz kommt zur Abdeckung eines weiten Versorgungsbereichs mit nur wenigen verschiedenen Zylinderwerten des torischen Zentralbereichs 7 der Kontaktlinsenrückfläche aus. Es hat sich gezeigt, dass in der Praxis zwei Werte von etwa minus 1 dpt cyl und minus 1,75 dpt cyl für die meisten Fälle genügen. Bei ellipsoidischer Ausgestaltung des peripheren Bereichs 8 der Linsenrückfläche gemäss der US-PS 5 069 542 genügen ebenfalls nur zwei Geometrien, und zwar eine für sog. flache und eine für sog. steile Anpassung. Insgesamt muss ein mit erfindungsgemässen Kontaktlinsen aufgebauter Linsensatz also nur relativ wenige verschiedene Kontaktlinsen umfassen, was natürlich sehr rationell und wünschenswert ist.

Die Daten einer beispielsweisen Kontaktlinse sind wie folgt:
Krümmungsradius rl des sphärischen Lenticular-Bereichs 1: 10,84 mm
Randdicke dr: 0,0835 mm
Krümmungsradius rz des sphärischen Zentralbereichs 2 der Linsenvorderfläche: 8,35 mm
Gesamtdicke tt der Kontaktlinse in der optischen Achse: 0,206 mm
Dicke ("Überhöhung") dz des Zentralbereichs 2 in der optischen Achse: 0,100 mm
Scheitelkrümmungsradius rs des ellipsoidischen peripheren Bereichs 8 der
Linsenrückfläche: 8,90 mm
Numerische Exzentrizität e des ellipsoidischen Bereichs 8: E = 0,4
Krümmungsradius r1 des ersten Hauptmeridians des torischen Zentralbereichs 7 der
Linsenrückfläche: 8,485 mm
Krümmungsradius r2 des zweiten Hauptmeridians: 8,861 mm
Brechkraft: sphärisch: +3,00 zylindrisch: -1,75 Linsenmaterial: Methylmethacrylat-Vinylpyrrolidon-Copolymer mit 60% Wassergehalt, wie zum Beispiel die Linse "Weicon CE" der Firma CIBA-Vision GmbH, Aschaffenburg, Deutschland.

## Patentansprüche

1. Weiche torische Kontaktlinse zur Korrektur von reinem Astigmatismus und Astigmatismus in Verbindung mit sphärischer Fehlsichtigkeit, mit einer dem Auge abgewandten Vorderfläche (1,2) und einer dem Auge zugewandten Rückfläche (7,8), welche einen optisch wirksamen Zentralbereich mit torischer Wirkung und einen diesen umgebenden, peripheren Bereich aufweist, dadurch gekennzeichnet, dass die Vorderfläche (1,2) der Kontaktlinse (CL) im wesentlichen rotationssymmetrisch ausgebildet ist und dass die Rückfläche (7,8) der Kontaktlinse im peripheren Bereich (8) asphärisch, insbesondere ellipsoidisch ausgebildet ist.

2. Kontaktlinse nach Anspruch 1, dadurch gekennzeichnet, dass die Vorderfläche (1) in einem oberen und/oder unteren Bereich mit einer abgeflachten Stabilisierungszone (4,5) zur dynamischen Orientierungs-Stabilisierung durch Lidschlag versehen ist.

3. Kontaktlinse nach Anspruch 1 oder 2, dadurch gekennzeichnet, dass insbesondere bei positiver Gesamtbrechkraft die Vorderfläche (1,2) aufgeteilt ist in einen optisch wirksamen Zentralbereich (2) und einen sich daran anschliessenden rotationssymmetrischen Lenticular-Bereich (1).

4. Kontaktlinse nach einem der Ansprüche 1-3, dadurch gekennzeichnet, dass der optisch wirksame Zentralbereich (7) der Rückfläche (7,8) einen mittleren Durchmesser von etwa 5 mm bis etwa 14 mm aufweist und etwa ovale Gestalt hat.

5. Linsensatz aus Kontaktlinsen gemäss einem der vorangehenden Ansprüche, dadurch gekennzeichnet, dass die torischen Zentralbereiche (7) der Kontaktlinsen-Rückflächen (7,8) vorzugsweise nur zwei verschiedene Zylinderwerte, insbesondere etwa minus 1 dpt cyl und etwa minus 1,75 dpt cyl aufweisen.

6. Linsensatz nach Anspruch 5, dadurch gekennzeichnet, dass die asphärischen, insbesondere ellipsoidischen peripheren Bereiche (8) der Kontaktlinsen-Rückflächen (7,8) vorzugsweise nur zwei Geometrien aufweisen.

## Claims

1. A soft toric contact lens for correcting pure astigmatism or astigmatism combined with spherical sight defects, having a front face (1,2) remote from the eye and a rear face (7,8) facing the eye that has an optically effective central region having toric effect and a peripheral region surrounding that central region, wherein the front face (1,2) of the contact lens (CL) is of substantially rotationally symmetrical shape and wherein the rear face (7,8) of the contact lens is of aspherical, especially ellipsoidal, shape in the peripheral region (8).

2. A contact lens according to claim 1, wherein the front face (1) is provided in an upper and/or lower region with a flattened stabilisation zone (4,5) for dynamic stabilisation of the orientation by blinking.

3. A contact lens according to claim 1 or 2, wherein especially in the case of positive total refractive power the front face (1,2) is divided into an optically effective central region (2) and an adjacent rotationally symmetrical lenticular region (1).

4. A contact lens according to any one of claims 1 to 3, wherein the optically effective central region (7) of the rear face (7, 8) has a mean diameter of from about 5 mm to about 14 mm and is of approximately oval shape.

5. A lens set comprising contact lenses according to any one of the preceding claims, wherein the toric central regions (7) of the contact lens rear faces (7,8) preferably have only two different cylindrical values, especially approximately minus 1 dptcyl and approximately minus 1.75 dptcyl.

6. A lens set according to claim 5, wherein the aspherical, especially ellipsoidal, peripheral regions (8) of the contact lens rear faces (7,8) preferably have only two geometries.

## Revendications

1. Lentille de contact torique souple pour corriger l'astigmatisme pur et l'astigmatisme associé à un défaut de vision sphérique, avec une face antérieure opposée à l'oeil (1, 2) et une face dorsale tournée vers l'oeil (7, 8), qui présente un domaine central optiquement efficace à effet torique et un domaine périphérique qui l'entoure, caractérisée en ce que la face antérieure (1, 2) de la lentille de contact (CL) a essentiellement une symétrie de rotation et que la face dorsale (7, 8) de la lentille de contact est asphérique dans le domaine périphérique (8), notamment ellipsoïdale.

2. Lentille de contact selon la revendication 1, caractérisée en ce que la face antérieure (1) est munie dans un domaine supérieur et/ou inférieur d'une zone de stabilisation aplatie (4, 5) pour la stabilisation - orientation dynamique par le battement de la paupière.

3. Lentille de contact selon la revendication 1 ou 2, caractérisée en ce que, notamment pour une réfringence positive, la face antérieure (1, 2) est composée d'un domaine central optiquement efficace (2) et d'un domaine lenticulaire (1) à symétrie de rotation qui s'y raccorde.

4. Lentille de contact selon l'une des revendications 1 - 3, caractérisée en ce que le domaine central optiquement efficace (7) de la face dorsale (7, 8) a un diamètre moyen d'environ 5 mm à environ 14 mm et a une forme approximativement ovale.

5. Jeu de lentilles de contact selon l'une des revendications précédentes, caractérisé en ce que les domaines centraux (7) des faces dorsales des lentilles de contact (7, 8) ne présentent de préférence que deux valeurs cylindriques différentes, notamment environ moins 1 dpt cyl et environ moins 1,75 dpt cyl.

6. Jeu de lentilles selon la revendication 5, caractérisé en ce que les domaines périphériques (8) asphériques, notamment ellipsoïdaux, des faces dorsales (7, 8) des lentilles de contact ne présentent de préférence que deux géométries.
